(19) Europäisches Patentamt
European Patent Office
Office européen des brevets

(11) **EP 4 660 903 A1**

(12) **EUROPEAN PATENT APPLICATION**
published in accordance with Art. 153(4) EPC

(43) Date of publication:
**10.12.2025 Bulletin 2025/50**

(21) Application number: **24759676.0**

(22) Date of filing: **20.02.2024**

(51) International Patent Classification (IPC):
***G06N 20/00*** (2019.01)

(52) Cooperative Patent Classification (CPC):
**G06N 20/00**

(86) International application number:
**PCT/CN2024/077788**

(87) International publication number:
**WO 2024/174999 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2023 CN 202310171526**

(71) Applicant: **Huawei Technologies Co., Ltd.
Shenzhen, Guangdong 518129 (CN)**

(72) Inventors:
• **XU, Jing
Beijing 100871 (CN)**

• **WANG, Sen
Shenzhen, Guangdong 518129 (CN)**
• **WANG, Liwei
Beijing 100871 (CN)**
• **CUI, Jinkai
Shenzhen, Guangdong 518129 (CN)**
• **YAO, Xin
Shenzhen, Guangdong 518129 (CN)**
• **ZHANG, Gong
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MODEL TRAINING METHOD AND APPARATUS, AND DEVICE**

(57) This application discloses a model training method and apparatus, and a device, and relates to the field of machine learning technologies. Because different computing devices have different data organization forms, a training device obtains correction data determined by each computing device based on a same training direction (a first gradient), so that the training device does not need to consider different data organization forms when training a model based on the correction data. This avoids a problem of poor stability of model training. In addition, all different computing devices run the model and output the correction data based on the same training direction. This helps the training device obtain a more accurate model training direction, thereby reducing a quantity of rounds of model training, and also reducing a quantity of times of communication between the training device and the computing devices. This helps improve a model convergence speed and model training efficiency.

FIG. 2

## Description

This application claims priority to Chinese Patent Application No. 202310171526.5, filed with the China National Intellectual Property Administration on February 20, 2023 and entitled "MODEL TRAINING METHOD AND APPARATUS, AND DEVICE", which is incorporated herein by reference in its entirety.

## TECHNICAL FIELD

This application relates to the field of machine learning technologies, and in particular, to a model training method and apparatus, and a device.

## BACKGROUND

A neural network (neural network) model is widely used in fields such as computer vision (computer vision, CV), speech recognition, and natural language processing (natural language processing, NLP). To improve model training efficiency, a processor usually processes data through distributed machine learning, to obtain a model prediction result. Federated learning in distributed machine learning is used as an example. The processor usually uses private data stored in different devices to complete model training without transmitting the private data. Private data stored in different devices usually has different distribution forms. Because of the different distribution forms, stability of a federated learning algorithm is poor, and a model convergence speed is slow, leading to a large quantity of rounds of model training. This leads to high communication overheads and a large quantity of rounds of communication between the processor and different devices. Therefore, how to provide a more efficient federated learning method for training a model becomes a problem to be urgently resolved currently.

## SUMMARY

This application provides a model training method and apparatus, and a device, to resolve a problem of high communication overheads that are caused by a low convergence speed during model training and a large quantity of rounds of communication caused by a large quantity of rounds of training.

According to a first aspect, this application provides a model training method. The method is performed by a training device. The training device may be a single computer, or may be a computer cluster that includes multiple computers connected via a communication network. For example, the communication network is a local area network, an Ethernet, or the like. The model training method includes: The training device sends a model and a first gradient of the model to multiple computing devices in response to a training request of the model, where the first gradient indicates a training direction of the model; the training device obtains, for each of the multiple computing devices, correction data obtained by running the model on each computing device, where the correction data is obtained by each computing device by processing, based on the direction indicated by the first gradient, training data stored in each computing device, and the correction data indicates a training direction in which a model parameter of the model matches the training request; and the training device trains the model based on multiple pieces of correction data in the multiple computing devices.

In this implementation, different computing devices have different data organization forms, and the training device obtains correction data determined by each computing device based on a same training direction (the first gradient), so that the training device does not need to consider different data organization forms when training the model based on the correction data. This avoids a problem of poor stability of model training. In addition, all different computing devices run the model and output the correction data based on the same training direction. This helps the training device obtain a more accurate model training direction, thereby reducing a quantity of rounds of model training, and also reducing a quantity of times of communication between the training device and the computing devices. This helps improve a model convergence speed and model training efficiency.

In a possible implementation, that the training device trains the model based on the multiple pieces of correction data in the multiple computing devices may include: The training device updates the first gradient based on the multiple pieces of correction data, to obtain a second gradient, where the second gradient indicates a training direction of the model indicated by the training data stored in each of the multiple computing devices; and the training device trains the model based on the second gradient.

In this embodiment, because the second gradient indicates the training direction of the model indicated by the training data stored in each of the multiple computing devices, the training data stored in each computing device may be used in a process in which the training device trains the model based on the second gradient, to avoid a problem that the model training efficiency is reduced because only some computing devices participate in training.

In a possible implementation, that the training device updates the first gradient based on the multiple pieces of correction data in the multiple computing devices, to obtain the second gradient may include: The training device obtains a reference value of the multiple pieces of correction data, where the reference value is an average value or a weighted value of the multiple pieces of correction data; and the training device updates the first gradient based on the reference value, to obtain the second gradient.

In this embodiment, the training device assigns, based on a status of the training data stored in each computing device, different weights to the correction data obtained by the computing devices, to determine the second gradient. In this way, when the training device trains the model based on the second gradient, the training device can effectively use information about the training data stored in the computing device, which helps the training device obtain the more accurate model training direction, thereby reducing the quantity of rounds of model training, and also reducing the quantity of times of communication between the training device and the communication devices. This helps improve the model convergence speed and the model training efficiency.

In a possible implementation, that the training device trains the model based on the second gradient may include: The training device trains the model by using the second gradient as a gradient descent direction of the model, where the gradient descent direction of the model is a direction in which the model converges fastest, and convergence of the model means that a difference between a predicted value of the model and a real value is the smallest.

The predicted value is a value obtained through model prediction, and the real value is an actual value. For example, if multiple pictures are classified, the predicted value is a predicted category obtained by classifying each of the multiple pictures by using a model, and the real value is an actual category of each of the multiple pictures.

In this embodiment, because the second gradient indicates the training direction of the model indicated by the training data stored in each of the multiple computing devices, the training data stored in each computing device may be used in the process in which the training device trains the model based on the second gradient, to avoid the problem that the model training efficiency is reduced because only some computing devices participate in training.

In a possible implementation, the multiple computing devices include a first computing device and a second computing device. The first computing device and the second computing device are different computing devices in any one of multiple rounds of training on the model. That the training device obtains the correction data obtained by running the model on each computing device may include: The training device obtains first correction data obtained by running the model on the first computing device; and the training device obtains second correction data obtained by running the model on the second computing device.

In a possible implementation, that the training device trains the model based on the multiple pieces of correction data in the multiple computing devices may include: The training device trains the model based on the multiple pieces of correction data in the multiple computing devices, to obtain a trained model; and the training device determines whether the trained model converges, and if the trained model converges, the training device outputs the trained model, where convergence of the trained model indicates that a difference between a predicted value of the trained model and a real value is the smallest.

Optionally, if the trained model does not converge, the training device sends the trained model and a first gradient of the trained model to the multiple computing devices. The training device obtains correction data obtained by running the trained model on each of the multiple computing devices. The training device retrains the trained model by using the multiple pieces of correction data, and determines whether a retrained model converges. If the retrained model converges, the retrained model is output. Otherwise, the foregoing steps are repeated until the model converges.

According to a second aspect, this application provides another model training method. The method is performed by a computing device, and the computing device stores training data. The computing device may be, but is not limited to, user equipment (user equipment, UE), a mobile station (mobile station, MS), a mobile terminal (mobile terminal, MT), or the like. The model training method includes: The computing device receives a model and a first gradient of the model in response to a training request of the model, where the first gradient indicates a training direction of the model; the computing device runs the model based on the training data and the direction indicated by the first gradient, to obtain correction data, where the correction data indicates a difference between a gradient obtained by training the model and the first gradient; and the computing device outputs the correction data.

In this embodiment, because the first gradient indicates the training direction of the model, the computing device runs the model based on the training data and the direction indicated by the first gradient, which helps obtain a more accurate model training direction, thereby reducing a quantity of rounds of model training, and also reducing a quantity of times of communication between the training device and the communications device. This helps improve a model convergence speed and model training efficiency.

In a possible implementation, that the computing device runs the model based on the training data and the direction indicated by the first gradient, to obtain the correction data may include: The computing device processes the training data based on the model and the direction indicated by the first gradient, and outputs a model processing result; the computing device obtains a second gradient of the model based on the model processing result and a data label of the training data, where the second gradient is a gradient used by the model to train the training data; and the computing device obtains the correction data based on the second gradient and the first gradient.

In a possible implementation, that the computing device obtains the second gradient of the model based on the model processing result and the data label of the training data may include: The computing device compares the model processing result with the data label of the training data, to obtain a difference value; and if the difference value is less than or equal to a specified threshold, the computing device obtains the second gradient used by the model to train the training data.

According to a third aspect, this application provides a model training apparatus. The model training apparatus includes units configured to perform the model training method according to the first aspect or any possible implementation of the first aspect.

In a possible design, the model training apparatus includes: a sending unit, configured to send a model and a first gradient of the model to multiple computing devices in response to a training request of the model, where the first gradient indicates a training direction of the model; a first obtaining unit, configured to obtain, for each of the multiple computing devices, correction data obtained by running the model on each computing device, where the correction data is obtained by each computing device by processing, based on the direction indicated by the first gradient, training data stored in each computing device, and the correction data indicates a training direction in which a model parameter of the model matches the training request; and a training unit, configured to train the model based on multiple pieces of correction data in the multiple computing devices.

According to a fourth aspect, this application provides a model computing apparatus. The model computing apparatus stores training data, and the model computing apparatus includes units configured to perform the model training method in the second aspect or any possible implementation of the second aspect.

In a possible design, the model computing apparatus includes: a receiving unit, configured to receive a model and a first gradient of the model in response to a training request of the model, where the first gradient indicates a training direction of the model; a second obtaining unit, configured to run the model based on the training data and the direction indicated by the first gradient, to obtain correction data, where the correction data indicates a difference between a gradient obtained by training the model and the first gradient; and an output unit, configured to output the correction data.

According to a fifth aspect, this application provides a chip. The chip includes a processor and a power supply circuit. The power supply circuit is configured to supply power to the processor. The processor is configured to perform the model training method according to the first aspect or any possible implementation of the first aspect, or is configured to perform the model training method according to the second aspect or any possible implementation of the second aspect.

According to a sixth aspect, this application provides a network interface card. The network interface card includes the chip according to the fifth aspect and an interface. The interface is configured to receive a signal from an apparatus other than the network interface card and send the signal to the chip, or is configured to send a signal from the chip to an apparatus other than the network interface card.

According to a seventh aspect, this application provides an electronic device. The electronic device includes an interface circuit and a control circuit. The interface circuit is configured to receive a signal from a device other than the electronic device and transmit the signal to the control circuit, or send a signal from the control circuit to a device other than the electronic device. The control circuit is configured to perform the model training method according to the first aspect or any possible implementation of the first aspect, or is configured to perform the model training method according to the second aspect or any possible implementation of the second aspect by using a logic circuit or by executing code instructions.

According to an eighth aspect, this application provides a model training system. The training system includes a training device and multiple computing devices. The training device is configured to perform the model training method according to the first aspect or any possible implementation of the first aspect. The computing device is configured to perform the model training method according to the second aspect or any possible implementation of the second aspect.

According to a ninth aspect, this application provides a computer-readable storage medium. The computer-readable storage medium stores a computer program or instructions. When the computer program or the instructions are executed by a processing device, the processing device is configured to perform the model training method according to the first aspect or any possible implementation of the first aspect, or is configured to perform the model training method according to the second aspect or any possible implementation of the second aspect.

According to a tenth aspect, this application provides a computer program product. The computing program product includes instructions. When the computer program product runs on a chip, an electronic device, or a network interface card, the chip, the electronic device, or the network interface card executes the instructions, to implement the model training method according to the first aspect or any possible implementation of the first aspect, or is configured to perform the model training method according to the second aspect or any possible implementation of the second aspect.

For beneficial effects of the third aspect to the tenth aspect, refer to the descriptions of the first aspect or any possible implementation of the first aspect, or the second aspect or any possible implementation of the second aspect. Details are not described herein again. In this application, on the basis of the implementations according to the foregoing aspects, the implementations may be further combined to provide more implementations.

**BRIEF DESCRIPTION OF DRAWINGS**

FIG. 1 is a diagram of a model training system according to this application;
FIG. 2 is a schematic flowchart of a model training method according to this application;
FIG. 3a is a flowchart of obtaining multiple pieces of correction data by a training device according to this application;
FIG. 3b is a diagram of gradient correction according to this application;
FIG. 4 is a schematic flowchart of another model training method according to this application;
FIG. 5 is a diagram of obtaining correction data based on a first gradient according to this application;
FIG. 6 is a diagram of convergence curve comparison between this application and four baseline methods on a cifar10 dataset;
FIG. 7 is a diagram of convergence curve comparison between this application and four baseline methods on a cifar100 dataset;
FIG. 8 is a diagram of correction when a SCAFFOLD algorithm is used;
FIG. 9 is a diagram of a structure of a model training apparatus according to this application;
FIG. 10 is a diagram of a structure of a model computing apparatus according to this application; and
FIG. 11 is a diagram of a structure of an electronic device according to this application.

**DESCRIPTION OF EMBODIMENTS**

An embodiment of this application provides a model training method. Different computing devices have different data organization forms, a training device obtains correction data determined by each computing device based on a same training direction (a first gradient), so that the training device does not need to consider different data organization forms when training a model based on the correction data. This avoids a problem of poor stability of model training. In addition, all different computing devices run the model and output the correction data based on the same training direction. This helps the training device obtain a more accurate model training direction, thereby reducing a quantity of rounds of model training, and also reducing a quantity of times of communication between the training device and the computing devices. This helps improve a model convergence speed and model training efficiency.

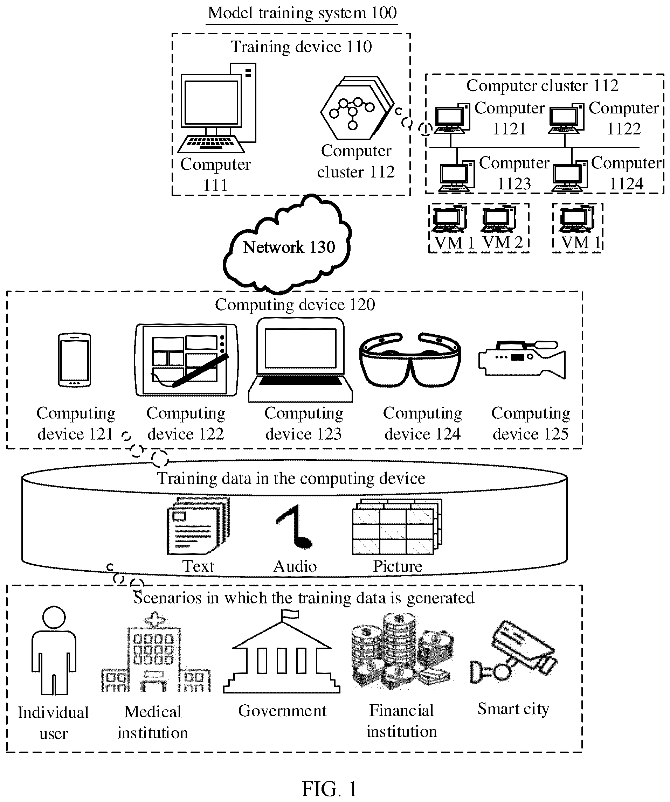

FIG. 1 is a diagram of a model training system according to this application. The model training system 100 includes a training device 110, multiple computing devices 120 (a computing device 121 to a computing device 125 shown in FIG. 1), and a network 130. The network 130 may implement a function of data transmission between the training device 110 and the multiple computing devices 120. The network 130 may include one or more network devices, and the network device may be a router, a switch, or the like.

The training device 110 may be, but is not limited to, a computer 111, a computer cluster 112, or the like.

In a first possible case, the training device 110 is the computer 111, and the computer 111 may include a memory, a processor, and one or more interfaces.

The memory included in the computer 111 may store a to-be-trained model. The memory may be a cache, a solid state drive (solid state drive, SSD), a hard disk drive (hard disk drive, HDD), a storage-class memory (storage-class memory, SCM), a memory, or another storage medium, for example, a storage particle that stores a specific quantity of bits, such as a single-level cell (single-level cell, SLC), a multi-level cell (multi-level cell, MLC), a triple-level cell (triple-level cell, TLC), or a quad-level storage cell (quad-level cell, QLC).

For example, the to-be-trained model may include but is not limited to an object identification model, a target detection model, an image classification model, or the like, or may be another artificial intelligence (artificial intelligence, AI) model that meets a user requirement and that is obtained based on a training dataset stored in the computing device, or the like.

The processor included in the computer 111 implements, based on multiple pieces of received correction data, training on the model stored in the memory. The processor may include one or more processor cores (cores). The processor may be an ultra-large-scale integrated circuit. An operating system and another software program are installed in the processor, so that the processor can implement access to the memory and various peripheral component interconnect express (Peripheral Component Interconnect express, PCIe) devices. It may be understood that in this embodiment, the core of the processor may be, for example, a central processing unit (central processing unit, CPU) or another application-specific integrated circuit (application-specific integrated circuit, ASIC). The processor may also be another general-purpose processor, a digital signal processor (digital signal processor, DSP), an application-specific integrated circuit (application-specific integrated circuit, ASIC), a field-programmable gate array (field-programmable gate array, FPGA), a graphics processing unit (graphics processing unit, GPU), an AI chip, a system-on-a-chip (system-on-a-chip, SoC) or another programmable logic device, a discrete gate or transistor logic device, a discrete hardware component, or the like. During actual application, a processing device 110 may also include multiple processors.

The one or more interfaces included in the computer 111 may receive correction data sent by the multiple computing devices 120.

In a second possible case, the training device 110 is the computer cluster 112. The computer cluster 112 is a set of computers connected via a local area network or the Internet. For example, the computer cluster 112 may have a rack, and the rack may establish communication for the multiple computers included in the computer cluster 112 through a wired connection, such as a universal serial bus (universal serial bus, USB) or a PCIe high-speed bus. The computer cluster 112 is usually configured to execute large tasks (which may also be referred to as jobs (jobs)). The jobs herein are usually large jobs that require a large quantity of resources for parallel processing. A property and a quantity of jobs are not limited in this embodiment. A job may contain multiple computing tasks generated during model training. These computing tasks can be allocated to multiple computing resources for execution. Most tasks are executed concurrently or in parallel, and some tasks need to depend on data generated by other tasks. Each computing device in the computer cluster 112 uses same hardware and a same operating system, or the computers in the computer cluster 112 use different hardware and different operating systems based on a service requirement.

As shown in FIG. 1, the computer cluster 112 includes multiple computers, for example, a computer 1121 to a computer 1124. Each computer may complete model training based on the multiple pieces of received correction data. For a computer, the computer may include multiple processors or processor cores, and each processor or processor core may be a model training resource. Therefore, a physical computer may provide multiple model training resources.

The computer cluster 112 may process multiple types of and multiple quantities of jobs. For example, the job means updating the model based on the correction data.

As shown in FIG. 1, the correction data may be submitted from the multiple computing devices 120 to the computer 1121 via the network and then to the computer cluster 112. When the correction data is submitted from the computer 1121 to the computer cluster 112, the computer 1121 may be configured to manage all computers in the computer cluster 112 to update the model based on the correction data, for example, scheduling computing resources or storage resources of other computers to update the model based on the correction data. In another possible implementation, a location at which the correction data is submitted may also be another computer in the computer cluster 112. A generation location at which the correction data is submitted is not limited in this embodiment.

As shown in FIG. 1, one or more virtual machines may run in the computer cluster 112. The virtual machine is a virtual device that virtualizes a physical computing resource, a storage resource, and a network resource by using a virtualization technology.

In a possible example, the one or more virtual machines (virtual machines, VMs) run on a host. For example, two VMs run on the computer 1121, and one VM runs on the computer 1124.

In another possible example, one VM runs on the multiple computers. For example, one VM uses a processing resource of the computer 1121 and a storage resource of the computer 1124.

It should be noted that the foregoing training device 110 may be a single computing device having a model training function, for example, a desktop computer, a notebook computer, a mobile phone, or a tablet computer.

The computing device 120 may be, but is not limited to, user equipment, a mobile station, a mobile terminal, or the like. The computing device may be a mobile phone (for example, the computing device 121 shown in FIG. 1), a tablet computer (for example, the computing device 122 shown in FIG. 1), a computer (for example, the computing device 123 shown in FIG. 1) having a wireless transceiver function, a virtual reality (virtual reality, VR) device (for example, the computing device 124 shown in FIG. 1), an augmented reality (augmented reality, AR) device, a monitoring device (the computing device 125 shown in FIG. 1) in industrial control (industrial control), a smart home (smart home), or a smart city (smart city), or the like.

The computing device 120 obtains the correction data through calculation based on the stored training data, the received model, and the gradient of the model. The training data may be sound, a picture, or text. The training data may be from different scenarios. For example, the training data may be from an individual user, a medical institution, a financial institution, a government, or a smart city, may be synthesized by a computer, or the like. The training data may be stored in the computing device 120 in advance, or may be generated in real time in a running process of the computing device 120. When the training data is stored in the computing device 120 in advance, the computing device 120 may include a memory. For related descriptions of the memory, refer to the foregoing description. Details are not described herein again.

The model training system 100 may include a computer 111, multiple computing devices 120, and a network 130, or may include a computer cluster 112, multiple computing devices 120, and a network 130.

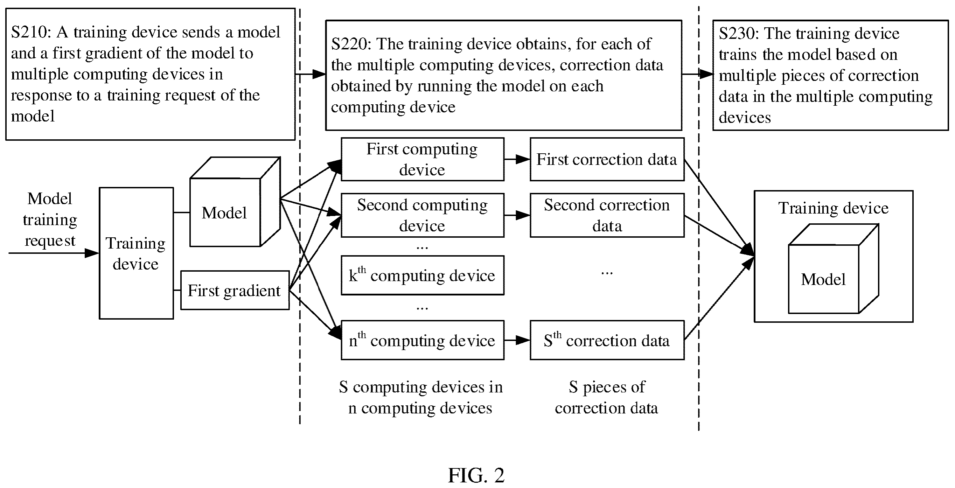

The foregoing describes, with reference to FIG. 1, the model training system provided in this application. The following describes, with reference to FIG. 1 and FIG. 2, a model training method used in this application. FIG. 2 is a schematic flowchart of the model training method according to this application. The model training method may be performed by the training device described in FIG. 1, and the method includes steps S210 to S230 below.

Step S210: The training device sends a model and a first gradient of the model to multiple computing devices in response to a training request of the model.

The first gradient is a vector, and has a magnitude and a direction. The magnitude of the first gradient indicates a model training step. The direction of the first gradient indicates a training direction of the model, and the training direction is a direction in which the model tends to converge.

For example, the training device selects S computing devices from n computing devices, and sends a to-be-trained model and a first gradient of the model to the S computing devices. n and S are both positive integers, and S is less than or equal to n.

For example, the training device randomly selects 10 computing devices from 100 computing devices, and sends the model and the first gradient of the model to the selected 10 computing devices.

Step S220: The training device obtains, for each of the multiple computing devices, correction data obtained by running the model on each computing device.

The correction data is obtained by each computing device by processing, based on the direction indicated by the first gradient, the training data stored in each computing device, and the correction data indicates a training direction in which a model parameter of the model matches the training request.

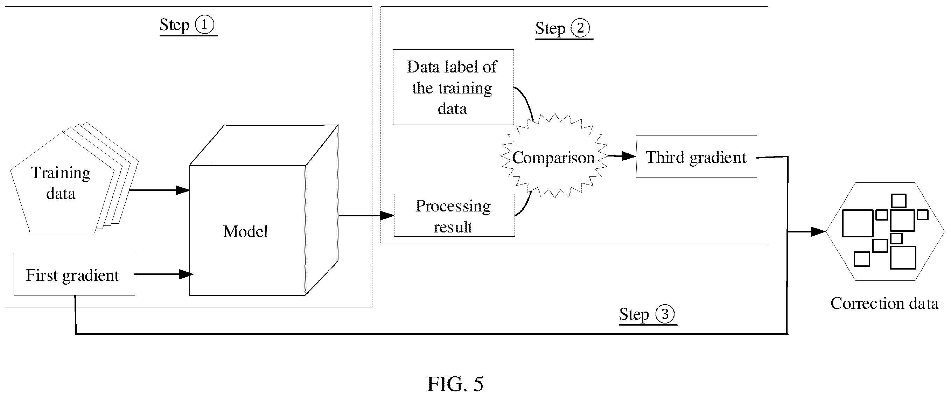

For a possible manner of obtaining the correction data, refer to the following description in FIG. 5. Details are not described herein again.

Step S230: The training device trains the model based on multiple pieces of correction data in the multiple computing devices.

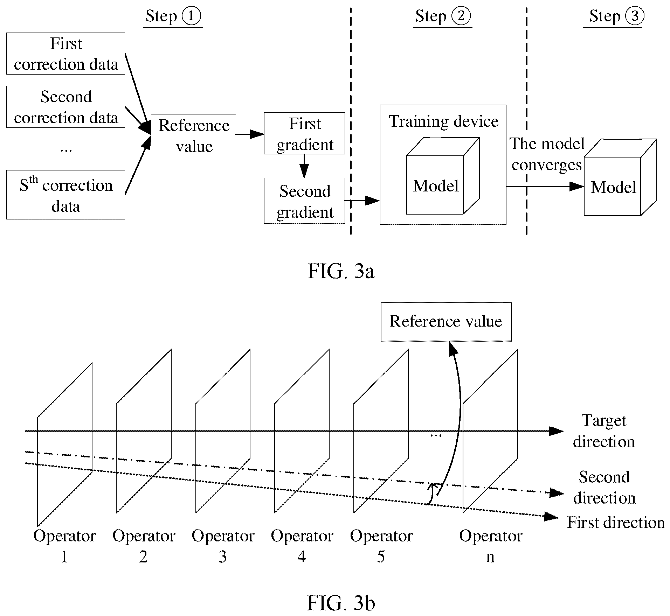

For example, FIG. 3a is a flowchart of obtaining the multiple pieces of correction data by the training device according to this application. FIG. 3b is a diagram of gradient correction according to this application. As shown in FIG. 3a, the procedure includes steps ① to ③ below.

Step ①: The training device updates the first gradient based on the multiple pieces of correction data, to obtain a second gradient. The second gradient indicates a training direction of the model indicated by the training data stored in each of the multiple computing devices.

In a possible case, the training device obtains a reference value of the multiple pieces of correction data, where the reference value is an average value or a weighted value of the multiple pieces of correction data. The training device updates the first gradient based on the reference value, to obtain the second gradient.

For example, a current round of training is a $(t+1)^{th}$ round of training experienced by the model, and a quantity of computing devices participating in the $(t+1)^{th}$ round of training is S. The S computing devices obtain S pieces of correction data through calculation, and one computing device obtains one piece of correction data. This may be represented by using the following formula (1). For a method for obtaining the correction data by the computing device through calculation, refer to the following description in FIG. 5. Details are not described herein again.

$$\Delta_{t+1} = -\frac{1}{a_l K |S|} \sum_{i \in S} \Delta_i^t \qquad \text{Formula (1)}$$

$\Delta_{t+1}$ represents the second gradient obtained through the $(t+1)^{th}$ round of training; $\Delta_i^t$ represents correction data sent by an $i^{th}$ computing device participating in a $t^{th}$ round of training; S represents a quantity of computing devices participating in the $t^{th}$ round of training; $a_l$ represents a learning rate; and K represents a quantity of pieces of training data stored in the $i^{th}$ computing device. The first gradient indicates a training direction of first t rounds of training on the model, for example, a first direction shown in FIG. 3b. The second gradient indicates a training direction indicated by the $(t+1)^{th}$ round of training, for example, a second direction shown in FIG. 3b. A difference between the first gradient and the second gradient indicates adjustment, by the $(t+1)^{th}$ round of training, of the training direction of the first t rounds of training, for example, a reference value shown in FIG. 3b.

The training direction indicated by the first gradient is the first direction shown in FIG. 3b, the training direction indicated by the second gradient is the second direction shown in FIG. 3b, and the reference value is a difference between the first direction and the second direction.

Step ②: The training device trains the model based on the second gradient.

In a possible case, the training device trains the model by using the second gradient as a gradient descent direction of the model. The gradient descent direction of the model is a direction in which the model converges fastest. Convergence of the model means that a difference between a predicted value of the model and a real value is the smallest.

For example, a process in which the training device trains the model by using the second gradient as the gradient descent direction of the model may be represented by using the following formula (2):

$$x_{t+1} = x_t - a_g \Delta_{t+1} \qquad \text{Formula (2)}$$

$x_{t+1}$ represents a model obtained through the $(t+1)^{th}$ rounds of training; $x_t$ represents a model obtained through the $t^{th}$ rounds of training; and $\Delta_{t+1}$ represents the second gradient obtained through the $(t+1)^{th}$ round of training.

Step ③: If a trained model converges, the training device outputs the trained model. Otherwise, the training device repeatedly performs step ① and step ② until the model converges, and outputs the model. Convergence of the trained model means that a difference between a predicted value of the trained model and a real value is the smallest.

The predicted value is a value obtained through model prediction, and the value may be an actual value or may not be an actual value. The real value is the actual value. For example, if multiple pictures are classified, the real value is an actual category of content presented in each of the multiple pictures. The predicted value is a classification result obtained by classifying the content presented in each of the multiple pictures by using a model. The classification result may be the actual category of the content presented in the picture or may not be the actual category of the content presented in the picture.

For example, a group of photos including cats and dogs are classified. For a photo of a cat in the group of photos, the real value is a category of an animal presented in the photo: a cat. The predicted value is a category, obtained after model processing, of an animal presented in the photo, and the result may be a cat or a dog. When the result is a cat, the predicted value is the same as the actual value. When the result is a dog, the predicted value is not the actual value.

In this embodiment, different computing devices have different data organization forms, and the training device obtains correction data determined by each computing device based on a same training direction (the first gradient), so that the training device does not need to consider different data organization forms when training the model based on the correction data. This avoids a problem of poor stability of model training. In addition, all different computing devices run the model and output the correction data based on the same training direction. This helps the training device obtain a more accurate model training direction, thereby reducing a quantity of rounds of model training, and also reducing a quantity of times of communication between the training device and the computing devices. This helps improve a model convergence speed and model training efficiency.

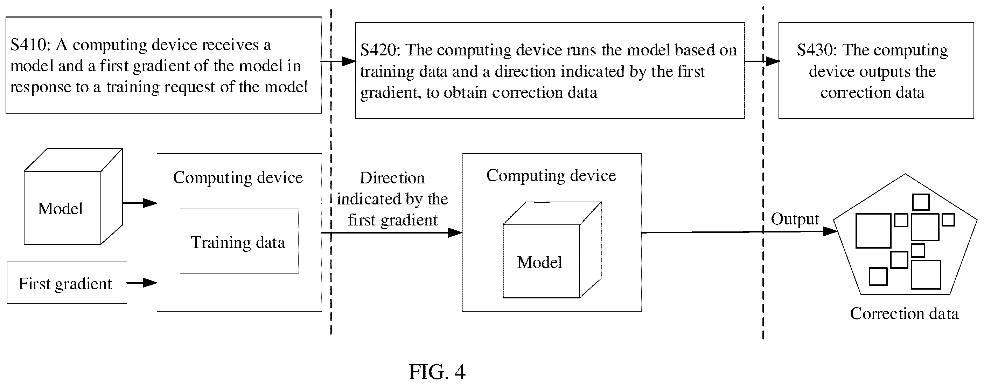

The foregoing describes, with reference to FIG. 2, FIG. 3a, and FIG. 3b, a process of training the model by using the training device to perform the model training method in this application. The following specifically describes, with reference to FIG. 4, another model training method. FIG. 4 is a schematic flowchart of the another model training method according to this application. The training method may be performed by a computing device. The computing device may be any one of the computing device 121 to the computing device 125 described in FIG. 1. The method includes steps S410 to S430 below.

Step S410: The computing device receives a model and a first gradient of the model in response to a training request of the model. The first gradient indicates a training direction of the model.

Step S420: The computing device runs the model based on training data and the direction indicated by the first gradient, to obtain correction data.

The correction data means a difference between a gradient obtained by training the model and the first gradient. FIG. 5 is a diagram of obtaining the correction data based on the first gradient according to this application. The process may include steps ① to ③ below.

Step ①: The computing device processes the training data based on the model and the direction indicated by the first gradient, and outputs a model processing result.

Step ②: The computing device obtains a third gradient of the model based on the model processing result and a data label of the training data.

The third gradient is a gradient used when the model trains the training data.

In a possible case, the computing device compares the model processing result with the data label of the training data, to obtain a difference value. If the difference value is less than or equal to a specified threshold, the third gradient used by the model to train the training data is obtained. Compared with the training direction indicated by the first gradient, a training direction indicated by the third gradient can make a difference between a predicted value obtained through model processing and a real value be smaller.

Step ③: The computing device obtains the correction data based on the third gradient and the first gradient.

Step S430: The computing device outputs the correction data.

In a possible example, that the computing device outputs the correction data includes: The computing device periodically sends the correction data to the training device.

In another possible example, that the computing device outputs the correction data includes: The computing device sends the correction data to the training device after receiving a correction data obtaining request from the training device.

In still another possible example, that the computing device outputs the correction data includes: The computing device stores the correction data in a segment of storage address space. The segment of storage address space may be accessed by the training device, and the training device periodically reads the correction data from the segment of storage address space.

The foregoing three possible examples are merely manners in which the computing device outputs the correction data provided in this embodiment, and should not be construed as limitations on this application. Depending on a communication manner between the training device and the computing device, the computing device may also output the correction data in more types of output manners.

In this embodiment, because the first gradient indicates the training direction of the model, the computing device runs the model based on the training data and the direction indicated by the first gradient, which helps obtain a more accurate model training direction, thereby reducing a quantity of rounds of model training, and also reducing a quantity of times of communication between the training device and the communications device. This helps improve a model convergence speed and model training efficiency.

Test accuracy and convergence curves of the model training method in this application and four baseline methods FedAvg, FedAdam, SCAFFOLD, and FedDyn are compared through experiments when same parameters are set in image classification tasks of cifar10 and cifar100 datasets. The same parameters include: local training rounds of 5, a batch magnitude of 50, a local learning rate of 0.1, a local learning rate decay parameter of 0.998, and a global learning rate of 1.0.

A setting I and a setting II are set. In the setting I, 100 computing devices participate in training. In each round of training, each computing device independently participates in training at a probability of 0.1. In the setting I, training data is 500 training pictures, and a same amount of training data is allocated to each computing device in the setting I. In the setting II, 500 computing devices participate in training. In each round of training, each computing device independently participates in training at a probability of 0.02. In the setting II, training data is 100 training pictures, and a same amount of training data is allocated to each computing device in the setting II.

To simulate different distribution forms of the training data stored in the computing devices, a dataset 1 that is independent and identically distributed (independent and identically distributed, iid) and a dataset 2 that is not identically and independently distributed (not identically and independently distributed, non-iid) are created. Training pictures in the dataset 1 are randomly allocated to each computing device. The dataset 2 samples a label ratio from Dirichlet distribution with a parameter of 0.6 to simulate different distribution forms of data. Specifically, the computing device first samples a vector $q \sim dir(\alpha p)$ from the Dirichlet distribution as distribution of different categories, and then extracts training data of each category from a training set based on p. p represents an all-one vector whose length is equal to a quantity of categories; and $\alpha$ represents a parameter that controls different distribution forms of data. $\alpha$ is negatively correlated with different distribution forms of data of the computing device. That is, a larger value of $\alpha$ means more balanced data allocation, and $\alpha$ tending to positive infinity corresponds to iid. A standard deep neural network ResNet18 model is used as a classifier, and batch standardization in the model is replaced with group standardization to better adapt to a federated learning task.

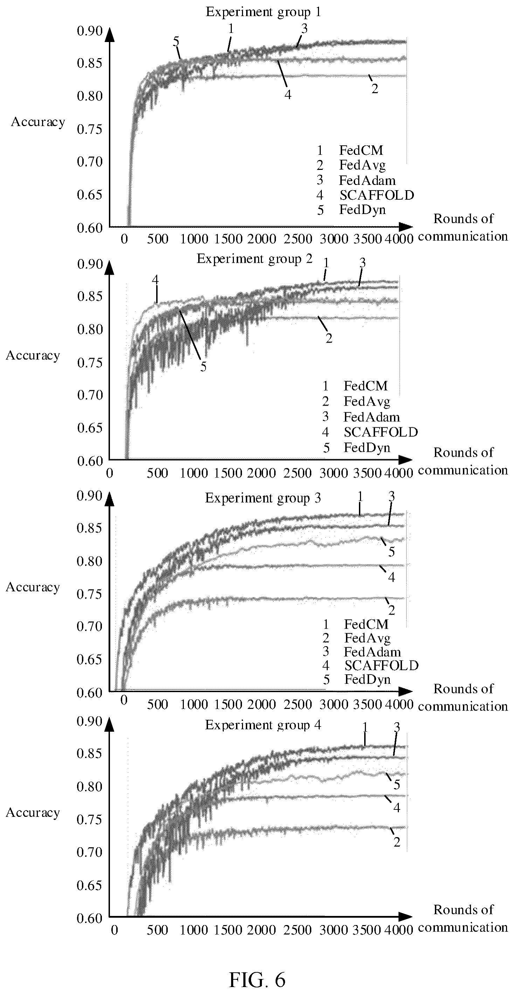

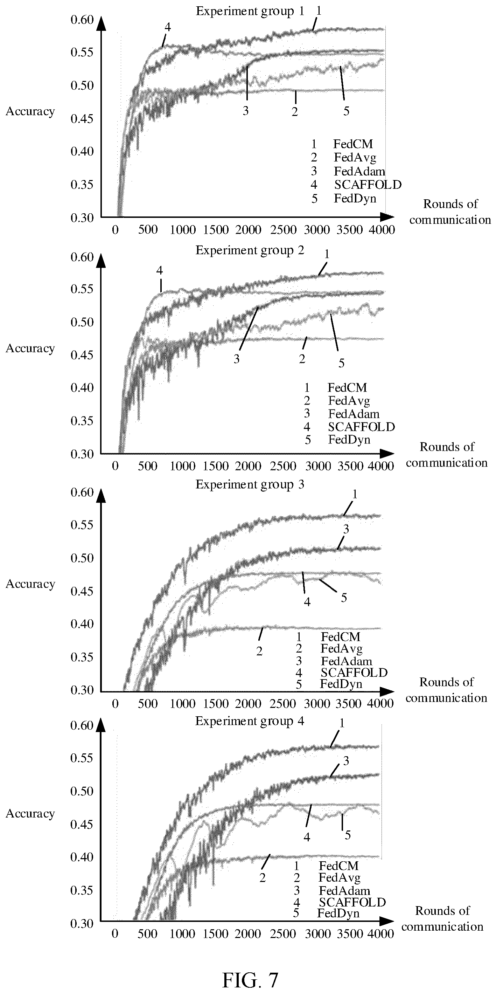

The test accuracy of the model training method in this application and the four baseline methods FedAvg, FedAdam, SCAFFOLD, and FedDyn on the cifar10 and cifar100 datasets is described in Table 1 and Table 2, respectively. It can be learned from Table 1 and Table 2 that the model training method in this application has highest test accuracy. The convergence curves of the model training method in this application and the four baseline methods FedAvg, FedAdam, SCAFFOLD, and FedDyn on the cifar10 and cifar100 datasets are shown in FIG. 6 and FIG. 7, respectively. FIG. 6 is a diagram of convergence curve comparison between this application and the four baseline methods on the cifar10 dataset. FIG. 7 is a diagram of convergence curve comparison between this application and the four baseline methods on the cifar100 dataset. It can be learned from FIG. 6 and FIG. 7 that the model training method of this application has best convergence.

Table 1

| Experiment group | Dataset | Test accuracy (%) | | | | |
|---|---|---|---|---|---|---|
| | | This application | FedAvg | FedAdam | SCAFFOLD | FedDyn |
| Setting I | Dataset 1 (iid) | **87.92** | 82.8 | 87.54 | 85.41 | 85.51 |
| | Dataset 2 (Dirichlet-0.6) | **87.61** | 82.14 | 86.77 | 84.62 | 85.14 |
| Setting II | Dataset 1 (iid) | **86.85** | 74.72 | 85.25 | 79.19 | 83.39 |
| | Dataset 2 (Dirichlet-0.6) | **86.24** | 73.93 | 84.62 | 78.59 | 82.25 |

Table 2

| Experiment group | Dataset | Test accuracy (%) | | | | |
|---|---|---|---|---|---|---|
| | | This application | FedAvg | FedAdam | SCAFFOLD | FedDyn |
| Setting I | Dataset 1 (iid) | **58.16** | 49.18 | 54.91 | 55.68 | 53.52 |
| | Dataset 2 (Dirichlet-0.6) | **57.96** | 47.76 | 54.67 | 55.31 | 52.95 |
| Setting II | Dataset 1 (iid) | **56.68** | 40.93 | 52.31 | 47.91 | 48.19 |
| | Dataset 2 (Dirichlet-0.6) | **56.64** | 40.08 | 52.24 | 47.71 | 47.98 |

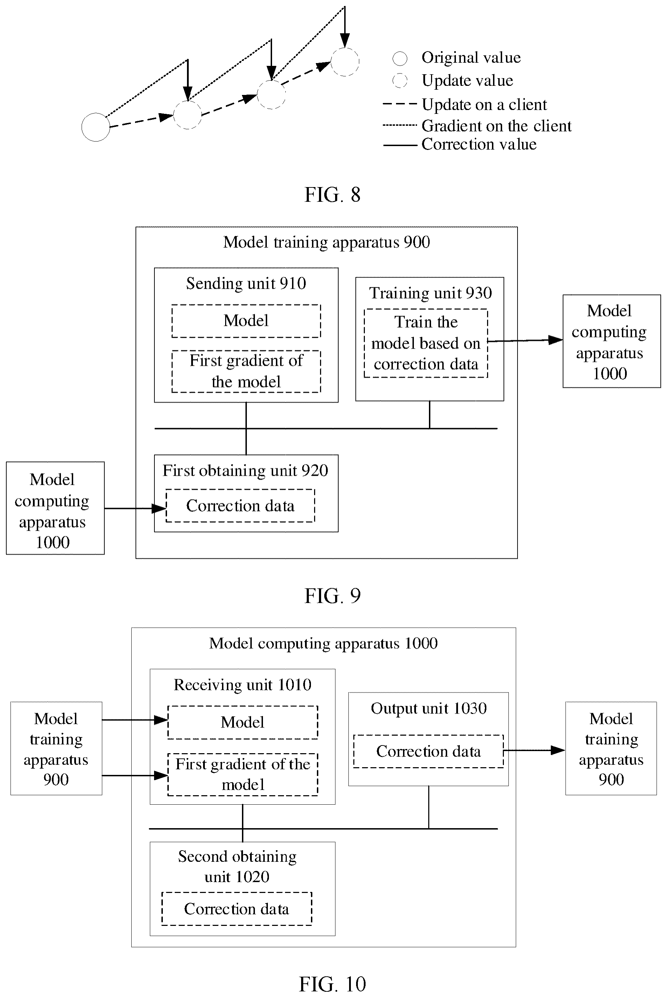

Comparing with the FedAdam algorithm where global information cannot be introduced into a local update and the SCAFFOLD algorithm where a global variable needs to be stored in the computing device, FIG. 8 is a correction diagram when using the SCAFFOLD algorithm. In the model training method in this application, the model is trained based on the correction data. Different computing devices have different data organization forms, and the training device obtains correction data determined by each computing device based on a same training direction (the first gradient), so that the training device does not need to consider different data organization forms when training the model based on the correction data. This avoids a problem of poor stability of model training. In addition, all different computing devices run the model and output the correction data based on the same training direction. This helps the training device obtain a more accurate model training direction, thereby reducing a quantity of rounds of model training, and also reducing a quantity of times of communication between the training device and the computing devices. This helps improve a model convergence speed and model training efficiency.

The foregoing describes, with reference to FIG. 1 to FIG. 8, the model training method provided in this application. The following describes, with reference to FIG. 9, a model training apparatus provided in this application. FIG. 9 is a diagram of a structure of the model training apparatus according to this application. The model training apparatus 900 includes a sending unit 910, a first obtaining unit 920, and a training unit 930. The model training apparatus is configured to implement any possible implementation described in FIG. 2.

The sending unit 910 is configured to send a model and a first gradient of the model to multiple computing devices in response to a training request of the model, where the first gradient indicates a training direction of the model.

The first obtaining unit 920 is configured to obtain, for each of the multiple computing devices, correction data obtained by running the model on each computing device, where the correction data is obtained by each computing device by processing, based on the direction indicated by the first gradient, training data stored in each computing device, and the correction data indicates a training direction in which a model parameter of the model matches the training request.

For example, the multiple computing devices include a first computing device and a second computing device. The first computing device and the second computing device are different computing devices in any one of multiple rounds of training on the model. The first obtaining unit 920 obtains first correction data obtained by running the model on the first computing device, and the first obtaining unit 920 obtains second correction data obtained by running the model on the second computing device.

The training unit 930 is configured to train the model based on multiple pieces of correction data in the multiple computing devices.

In a possible implementation, that the training unit 930 is configured to train the model based on the multiple pieces of correction data in the multiple computing devices may include steps ① and ② below.

Step ①: The training unit 930 is specifically configured to update the first gradient based on the multiple pieces of correction data, to obtain a second gradient. The second gradient indicates a training direction of the model indicated by the training data stored in each of the multiple computing devices. For example, the training unit 930 obtains a reference value of the multiple pieces of correction data. The reference value is an average value or a weighted value of the multiple pieces of correction data. The training unit 930 updates the first gradient based on the reference value, to obtain the second gradient.

Step ②: The training unit 930 is specifically configured to train the model based on the second gradient. For example, the training unit 930 trains the model by using the second gradient as a gradient descent direction of the model. The gradient descent direction of the model indicates a direction in which the model converges fastest. Convergence of the model means that a difference between a predicted value of the model and a real value is the smallest.

The training unit 930 is configured to determine convergence of a trained model. If the trained model converges, the training unit 930 is configured to output the trained model. Convergence of the trained model means that a difference between a predicted value of the trained model and a real value is the smallest.

In this embodiment, different computing devices have different data organization forms, and the model training apparatus obtains correction data determined by each computing device based on a same training direction (the first gradient), so that the model training apparatus does not need to consider different data organization forms when training the model based on the correction data. This avoids a problem of poor stability of model training. In addition, all different computing devices run the model and output the correction data based on the same training direction. This helps the model training apparatus obtain a more accurate model training direction, thereby reducing a quantity of rounds of model training. This helps improve a model convergence speed and model training efficiency.

The foregoing describes, with reference to FIG. 9, the model training apparatus provided in this application. The following describes, with reference to FIG. 10, a model computing apparatus provided in this application. FIG. 10 is a diagram of a structure of a model computing apparatus according to this application. The model computing apparatus 1000 stores training data. The model computing apparatus 1000 includes a receiving unit 1010, a second obtaining unit 1020, and an output unit 1030.

The receiving unit 1010 is configured to receive a model and a first gradient of the model in response to a training request of the model, where the first gradient indicates a training direction of the model.

The second obtaining unit 1020 is configured to run the model based on the training data and the direction indicated by the first gradient, to obtain correction data, where the correction data indicates a difference between a gradient obtained by training the model and the first gradient.

In a possible case, that the second obtaining unit 1020 is configured to run the model based on the training data and the direction indicated by the first gradient, to obtain the correction data may include steps ① to ③ below.

Step ①: The second obtaining unit 1020 is specifically configured to process the training data based on the model and the direction indicated by the first gradient, and output a model processing result.

Step ②: The second obtaining unit 1020 is specifically configured to obtain a second gradient of the model based on the model processing result and a data label of the training data, where the second gradient is a gradient used by the model to train the training data. For example, the second obtaining unit 1020 is specifically configured to compare the model processing result with the data label of the training data, to obtain a difference value. If the difference value is less than or equal to a specified threshold, the second obtaining unit 1020 is configured to obtain the second gradient used by the model to train the training data.

Step ③: The second obtaining unit 1020 is configured to obtain the correction data based on the second gradient and the first gradient.

The output unit 1030 is configured to output the correction data.

In this embodiment, because the first gradient indicates the training direction of the model, the model computing apparatus runs the model based on the training data and the direction indicated by the first gradient, which helps obtain a more accurate model training direction, thereby reducing a quantity of rounds of model training. This helps improve a model convergence speed and model training efficiency.

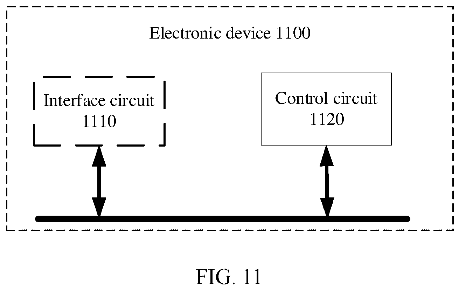

The foregoing describes, with reference to FIG. 10, the model computing apparatus provided in this application. The following specifically describes, with reference to FIG. 11, an electronic device provided in this application. FIG. 11 is a diagram of a structure of the electronic device according to this application. The electronic device 1100 includes an interface circuit 1110 and a control circuit 1120.

The interface circuit 1110 is configured to receive a signal from a device other than the electronic device 1100 and transmit the signal to the control circuit 1120, or send a signal from the control circuit 1120 to a device other than the electronic device 1100. The control circuit 1120 implements, by using a logic circuit or executing code instructions, any model training method described in FIG. 2 to FIG. 5.

This application further provides a chip. The chip includes a processor and a power supply circuit. The power supply circuit is configured to supply power to the processor. The processor is configured to implement functions of the training device and the computing device in any model training method described in FIG. 2 to FIG. 5. In a possible example, a chip system further includes a memory, configured to store program instructions and/or data. The chip system may include the chip, or may include the chip and another discrete component.

This application further provides a network interface card. The network interface card includes the chip and the interface described above. The interface receives a signal from an apparatus other than the network interface card and sends the signal to the chip, or sends a signal from the chip to an apparatus other than the network interface card.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A model training method, wherein the method comprises:

   sending a model and a first gradient of the model to multiple computing devices in response to a training request of the model, wherein the first gradient indicates a training direction of the model;
   obtaining, for each of the multiple computing devices, correction data obtained by running the model on each computing device, wherein the correction data is obtained by each computing device by processing, based on the direction indicated by the first gradient, training data stored in each computing device, and the correction data indicates a training direction in which a model parameter of the model matches the training request; and
   training the model based on multiple pieces of correction data in the multiple computing devices.

2. The method according to claim 1, wherein
   training the model based on the multiple pieces of correction data in the multiple computing devices comprises:

   training the model based on the multiple pieces of correction data in the multiple computing devices, to obtain a trained model; and
   if the trained model converges, outputting the trained model, wherein convergence of the trained model indicates that a difference between a predicted value of the trained model and a real value is the smallest.

3. The method according to claim 1 or 2, wherein
   training the model based on the multiple pieces of correction data in the multiple computing devices comprises:

   updating the first gradient based on the multiple pieces of correction data, to obtain a second gradient, wherein the second gradient indicates a training direction of the model indicated by the training data stored in each of the multiple computing devices; and
   training the model based on the second gradient.

4. The method according to claim 3, wherein
   updating the first gradient based on the multiple pieces of correction data in the multiple computing devices, to obtain the second gradient comprises:

   obtaining a reference value of the multiple pieces of correction data, wherein the reference value is an average value or a weighted value of the multiple pieces of correction data; and
   updating the first gradient based on the reference value, to obtain the second gradient.

5. The method according to claim 3, wherein
   training the model based on the second gradient comprises:
   training the model by using the second gradient as a gradient descent direction of the model, wherein the gradient descent direction of the model indicates a direction in which the model converges fastest, and convergence of the model indicates that a difference between a predicted value of the model and a real value is the smallest.

6. The method according to any one of claims 1 to 5, wherein the multiple computing devices comprise a first computing device and a second computing device, and the first computing device and the second computing device are different computing devices in any one of multiple rounds of training on the model; and
   obtaining the correction data obtained by running the model on each computing device comprises:

   obtaining first correction data obtained by running the model on the first computing device; and
   obtaining second correction data obtained by running the model on the second computing device.

7. A model training method, wherein the method is performed by a computing device, the computing device stores training data, and the method comprises:

   receiving a model and a first gradient of the model in response to a training request of the model, wherein the first gradient indicates a training direction of the model;
   running the model based on the training data and the direction indicated by the first gradient, to obtain correction data, wherein the correction data indicates a difference between a gradient obtained by training the model and the first gradient; and

outputting the correction data.

8. The method according to claim 7, wherein
running the model based on the training data and the direction indicated by the first gradient, to obtain the correction data comprises:

   processing the training data based on the model and the direction indicated by the first gradient, and outputting a model processing result;
   obtaining a second gradient of the model based on the model processing result and a data label of the training data, wherein the second gradient is a gradient used by the model to train the training data; and
   obtaining the correction data based on the second gradient and the first gradient.

9. The method according to claim 8, wherein
obtaining the second gradient of the model based on the model processing result and the data label of the training data comprises:

   comparing the model processing result with the data label of the training data, to obtain a difference value; and
   if the difference value is less than or equal to a specified threshold, obtaining the second gradient used by the model to train the training data.

10. A model training apparatus, wherein the model training apparatus comprises:

    a sending unit, wherein the sending unit is configured to send a model and a first gradient of the model to multiple computing devices in response to a training request of the model, and the first gradient indicates a training direction of the model;
    a first obtaining unit, wherein the first obtaining unit is configured to obtain, for each of the multiple computing devices, correction data obtained by running the model on each computing device, the correction data is obtained by each computing device by processing, based on the direction indicated by the first gradient, training data stored in each computing device, and the correction data indicates a training direction in which a model parameter of the model matches the training request; and
    a training unit, wherein the training unit is configured to train the model based on multiple pieces of correction data in the multiple computing devices.

11. A model computing apparatus, wherein the model computing apparatus stores training data, and the model computing apparatus comprises:

    a receiving unit, wherein the receiving unit is configured to receive a model and a first gradient of the model in response to a training request of the model, and the first gradient indicates a training direction of the model;
    a second obtaining unit, wherein the second obtaining unit is configured to run the model based on the training data and the direction indicated by the first gradient, to obtain correction data, and the correction data indicates a difference between a gradient obtained by training the model and the first gradient; and
    an output unit, wherein the output unit is configured to output the correction data.

12. A chip, comprising a processor and a power supply circuit, wherein the power supply circuit is configured to supply power to the processor, and the processor is configured to perform the method according to any one of claims 1 to 6 or the method according to any one of claims 7 to 9.

13. A network interface card, comprising the chip according to claim 12 and an interface, wherein the interface is configured to receive a signal from an apparatus other than the model training card and send the signal to the chip, or is configured to send a signal from the chip to an apparatus other than the model training card.

14. An electronic device, comprising an interface circuit and a control circuit, wherein
the interface circuit is configured to receive a signal from a device other than the electronic device and transmit the signal to the control circuit, or send a signal from the control circuit to a device other than the electronic device, and the control circuit is configured to implement the method according to any one of claims 1 to 6 or the method according to any one of claims 7 to 9 by using a logic circuit or by executing code instructions.

15. A model training system, comprising a training device and multiple computing devices, wherein

the training device is configured to perform the method according to any one of claims 1 to 6; and

the computing device is configured to perform the method according to any one of claims 7 to 9.

16. A computer-readable storage medium, wherein the storage medium stores a computer program or instructions, and when the computer program or the instructions are executed by a processing device, the method according to any one of claims 1 to 6 or the method according to any one of claims 7 to 9 is implemented.

Model training system 100

Training device 110

Computer 111

Computer cluster 112

Computer cluster 112

Computer 1121   Computer 1122

Computer 1123   Computer 1124

VM 1   VM 2       VM 1

Network 130

Computing device 120

Computing device 121   Computing device 122   Computing device 123   Computing device 124   Computing device 125

Training data in the computing device

Text          Audio          Picture

Scenarios in which the training data is generated

Individual user   Medical institution   Government   Financial institution   Smart city

FIG. 1

EP 4 660 903 A1

| S210: A training device sends a model and a first gradient of the model to multiple computing devices in response to a training request of the model | S220: The training device obtains, for each of the multiple computing devices, correction data obtained by running the model on each computing device | S230: The training device trains the model based on multiple pieces of correction data in the multiple computing devices |
| --- | --- | --- |

Model training request → Training device → Model / First gradient

First computing device → First correction data

Second computing device → Second correction data

...

$k^{th}$ computing device

...

$n^{th}$ computing device → $S^{th}$ correction data

S computing devices in n computing devices

S pieces of correction data

Training device — Model

FIG. 2

Step ① | Step ② | Step ③

First correction data

Second correction data

...

$S^{th}$ correction data

Reference value → First gradient → Second gradient

Training device

Model

The model converges → Model

FIG. 3a

Reference value

Operator 1 | Operator 2 | Operator 3 | Operator 4 | Operator 5 | Operator n

Target direction

Second direction

First direction

FIG. 3b

EP 4 660 903 A1

| S410: A computing device receives a model and a first gradient of the model in response to a training request of the model | S420: The computing device runs the model based on training data and a direction indicated by the first gradient, to obtain correction data | S430: The computing device outputs the correction data |

Model

First gradient

Computing device

Training data

Direction indicated by the first gradient

Computing device

Model

Output

Correction data

FIG. 4

FIG. 5

FIG. 6

FIG. 7

○ Original value

◌ Update value

--- Update on a client

......... Gradient on the client

—— Correction value

FIG. 8

FIG. 9

FIG. 10

FIG. 11

## INTERNATIONAL SEARCH REPORT

| | International application No. |
|---|---|
| | **PCT/CN2024/077788** |

| A. | CLASSIFICATION OF SUBJECT MATTER |
|---|---|

G06N 20/00(2019.01)i

According to International Patent Classification (IPC) or to both national classification and IPC

| B. | FIELDS SEARCHED |
|---|---|

Minimum documentation searched (classification system followed by classification symbols)

IPC: G06N G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 模型, 训练, 梯度, 修正, 收敛, 预测, model, training, gradient, correction, convergence, prediction

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114118442 A (CHINA TELECOM CORP., LTD.) 01 March 2022 (2022-03-01) description, paragraphs [0063]-[0129], and figures 1-7 | 1-16 |
| A | CN 112069414 A (TENCENT TECHNOLOGY (SHENZHEN) CO., LTD.) 11 December 2020 (2020-12-11) description, paragraphs [0085]-[0167], and figures 1-6 | 1-16 |
| A | CN 113657596 A (JINGDONG SHUKE HAIYI INFORMATION TECHNOLOGY CO., LTD.) 16 November 2021 (2021-11-16) description, paragraphs [0029]-[0083], and figures 1-2 | 1-16 |
| A | US 2023052231 A1 (ORACLE INTERNATIONAL CORP.) 16 February 2023 (2023-02-16) entire document | 1-16 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 May 2024** | **13 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/077788**

| Patent document cited in search report | | | Publication date (day/month/year) | Patent family member(s) | Publication date (day/month/year) |
|---|---|---|---|---|---|
| CN | 114118442 | A | 01 March 2022 | None | |
| CN | 112069414 | A | 11 December 2020 | None | |
| CN | 113657596 | A | 16 November 2021 | None | |
| US | 2023052231 | A1 | 16 February 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310171526